(19) Europäisches Patentamt
European Patent Office
Office européen des brevets

(11) EP 3 724 268 B1

(12) **EUROPEAN PATENT SPECIFICATION**

(45) Date of publication and mention of the grant of the patent:
**15.06.2022 Bulletin 2022/24**

(21) Application number: **17934670.5**

(22) Date of filing: **11.12.2017**

(51) International Patent Classification (IPC):
***B60C 1/00*** *(2006.01)* ***C08K 3/00*** *(2018.01)*
***C08K 5/00*** *(2006.01)* ***C08K 7/04*** *(2006.01)*
***C08L 9/06*** *(2006.01)* ***C08K 7/14*** *(2006.01)*
***C08K 7/06*** *(2006.01)* ***B60C 11/14*** *(2006.01)*

(52) Cooperative Patent Classification (CPC):
**B60C 1/0016; C08K 7/06; C08K 7/14; C08L 9/06;**
B60C 2011/145; C08K 2201/003; C08K 2201/004

(86) International application number:
**PCT/JP2017/044330**

(87) International publication number:
**WO 2019/116420 (20.06.2019 Gazette 2019/25)**

(54) **A RUBBER COMPOSITION**

KAUTSCHUKZUSAMMENSETZUNG

COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.10.2020 Bulletin 2020/43**

(73) Proprietor: **COMPAGNIE GENERALE DES ETABLISSEMENTS MICHELIN**
**63000 Clermont-Ferrand (FR)**

(72) Inventor: **MAESAKA, Masayuki**
**Tokyo 163-1073 (JP)**

(74) Representative: **Regimbeau**
**20, rue de Chazelles**
**75847 Paris Cedex 17 (FR)**

(56) References cited:

| | |
|---|---|
| **EP-A2- 1 072 446** | **WO-A1-2016/104815** |
| **WO-A1-2016/195050** | **JP-A- 2002 105 789** |
| **JP-A- 2002 249 619** | **JP-A- 2002 348 411** |
| **JP-A- 2003 327 754** | **JP-A- 2011 001 521** |
| **JP-A- 2011 001 521** | **JP-A- 2013 147 561** |
| **JP-A- 2017 048 339** | **JP-A- 2017 206 580** |
| **US-A1- 2006 292 356** | **US-A1- 2007 221 303** |
| **US-A1- 2013 319 589** | **US-A1- 2016 311 258** |
| **US-A1- 2017 066 909** | **US-A1- 2017 246 905** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 724 268 B1

## Description

### Technical Field

The field of the invention is that of rubber compositions intended in particular for rubber articles, for example, tires, shoes, conveyors or caterpillar tracks, in more particular for tire treads, in still more particular for treads of tires capable of rolling over ground surface covered with snow.

### Background Art

As is known, the snow tires classified in a category of use "snow", identified by an inscription the alpine symbol ("3-peak-mountain with snowflake"), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

### Citation List

### Patent Literature

PTL 1: WO 2012/069565
PTL 2: WO 2015/086449

The patent literature 1 discloses a tire tread that comprises a rubber composition based on a functional diene elastomer, a reinforcing inorganic filler and a plasticizing agent, said tire having an improved grip on wet ground without deteriorating the grip performance on snow ground.

Snowy roads have a low friction coefficient, therefore a constant objective of manufacturers for articles (for example, tires) is to further improve the balance of performances of the articles between grip on snowy road and stability on normal road, that is normal road behavior.

It is well known for a skilled person in the art to incorporate reinforcing fibers (for example, carbon fibers) into rubber compositions in order to improve several performances. Such reinforcing fibers have features of hardness and brittleness, and mechanical action during the conventional mixing of the reinforcing fibers with the other ingredients of the rubber compositions chops the reinforcing fibers into a length much smaller than their original length, that is to say the length that they had before mixing, as mentioned in the patent literature 2. That means the length of reinforcing fibers in the mixed state, especially in the cured state, when the rubber compositions based on the reinforcing fibers deliver the performances, are very different from that in the original state.

Known rubber compositions are disclosed in WO 2016/104815, US 2007/221303, JP 2013147561, US 2006/292356, JP 2002249619, EP 1072446 and JP 2011001521.

### Summary of Invention

### Technical Problem

During their research, the inventor has discovered that a specific rubber composition based on reinforcing fibers with a specific volume average fiber length in the mixed state, especially in the cured state, for a rubber article, for example, a tire tread, a shoe sole, a conveyor belt and a caterpillar track tread, which allows an unexpectedly improved balance of tire performances between snow grip and normal road behavior.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each $Tg_{DSC}$ (glass transition temperature) is measured in a known way by DSC (Differential Scanning Calorimetry) in accordance with Standard ASTM D3418-08.

Any interval of values denoted by the expression "between a and b" represents the range of values of greater than "a" and of less than "b" (i.e. the limits a and b excluded) whereas any interval of values denoted by the expression

"from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" means "in the circumferential or axial direction".

## Solution to Problem

A first aspect of the invention is a rubber composition as defined in claim 1. The rubber composition is based on at least:

- an elastomer matrix;
- a reinforcing filler predominately comprising a reinforcing inorganic filler;
- more than 5 phr of reinforcing fibers selected from the group consisting of basalt fibers, glass fibers, carbon fibers and the mixtures thereof, preferably carbon fibers; and
- a plasticizing agent;

wherein the volume average length of reinforcing fibers in the rubber composition in the mixed state, especially in the cured state, is between 1.0 and 10 mm.

## Advantageous Effects of Invention

The specific rubber composition based on the reinforcing fibers with the specific volume average fiber length (volume average length of the reinforcing fibers) in the mixed state, especially in the cured state, allows the improved balance performances between snow grip and normal road behavior.

Each of the below aspect(s), the embodiment(s) and the variant(s) including each of the preferred range(s) and/or matter(s) may be applied to any one of the other aspect(s), the other embodiment(s) and the other variant(s) of the invention unless expressly stated otherwise.

The rubber composition according to the invention is based on an elastomer matrix.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (mol %); thus it is that diene elastomers such as butyl rubbers or diene/$\alpha$ -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of rubbers will understand that the invention is preferably employed with essentially unsaturated diene elastomers.

Given these definitions, the expression diene elastomer capable of being used in the compositions in accordance with the invention is understood in particular to mean:

(a) - any homopolymer obtained by polymerization of a conjugated diene monomer, preferably having from 4 to 12 carbon atoms;

(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

A second aspect of the invention is the rubber composition according to the first aspect, wherein the elastomer matrix comprises at least one diene elastomer selected from the group consisting of natural rubber (NR), synthetic polyisoprenes (IRs), polybutadienes (BRs), butadiene copolymers, isoprene copolymers and the mixtures thereof; such copolymers are preferably selected from the group consisting of butadiene copolymers the mixtures thereof, more preferably selected from the group consisting of styrene-butadiene copolymers (SBR), butadiene-isoprene copolymers (BIR), styrene-isoprene copolymers (SIR), styrene-butadiene-isoprene copolymers (SBIR) and the mixtures thereof, still more preferably selected from the group consisting of styrene-butadiene copolymers (SBR) and the mixtures thereof.

The diene elastomer may have any microstructure which depends on the polymerization conditions used, in particular on the presence or absence of a modifying and/or randomizing agent and on the amounts of modifying and/or randomizing agent employed. This elastomer may, for example, be a block, statistical, sequential or micro sequential elastomer and may be prepared in dispersion or in solution. This elastomer may be coupled and/or star-branched or else functionalized with a coupling and/or starbranching or functionalizing agent.

A third aspect of the invention is the rubber composition according to the first aspect or the second aspect, wherein the elastomer matrix comprises more than 50 phr (for example, more than 50 phr and up to 100 phr), preferably more than 60 phr (for example, between 60 and 90 phr), more preferably more than 70 phr (for example, between 70 and 80 phr), of a first diene elastomer which is a styrene-butadiene copolymer, advantageously a solution styrene-butadiene copolymer, and optionally comprising less than 50 phr (for example, 0 phr to less than 50 phr), preferably less than 40 phr (for example, between 10 and 40 phr), more preferably less than 30 phr (for example, between 20 and 30 phr), of a second diene elastomer which is different from the first diene elastomer, preferably polybutadiene, more preferably having a content (molar %) of 1,2-units of between 4% and 80% or having a content (molar %) of cis-1,4-units of more than 80%, still more preferably more than 90% (molar %), particularly more than or equal to 96% (molar %).

According to a preferred embodiment of the second aspect or the third aspect, the styrene-butadiene copolymer may exhibit a styrene unit of less than 30% by weight (for example, between 3 and 30% by weight) per 100% by weight of the styrene-butadiene copolymer, preferably less than 27% by weight (for example, between 5 and 27% by weight), more preferably less than 23% by weight (for example, between 7 and 23% by weight), still more preferably less than 20% by weight (for example, between 10 and 20% by weight), particularly at most 18% by weight (for example, from 12 to 18%). The styrene unit can be determined by 1H NMR method in accordance with ISO 21561.

According to a more preferred embodiment of the second aspect, the third aspect or the preferred embodiment, the styrene-butadiene copolymer may exhibit a glass transition temperature of less than -40°C (for example, between -40°C and -110°C), preferably less than -45°C (for example, between -45°C and -105°C), more preferably less than -50°C (for example, between -50°C and -100°C), still more preferably less than -55°C (for example, between -55°C and -95°C), particularly at most -60°C (for example, -60°C to -90°C).

The rubber composition according to the invention is based on a reinforcing filler.

The reinforcing filler may comprise a reinforcing inorganic filler (for example, silica), carbon black or the mixtures thereof.

The reinforcing filler in the rubber composition according to the invention predominately comprises a reinforcing inorganic filler, that means, the reinforcing filler comprises more than 50% by weight of the reinforcing inorganic filler per 100% of the total reinforcing filler. Preferably, the content of the reinforcing inorganic filler is more than 60% by weight, more preferably more than 70% by weight, still more preferably more than 80% by weight, particularly more than 90% by weight, per 100% of the total reinforcing filler.

A fourth aspect of the invention is the rubber composition according to any one of the first to the third aspects, wherein the reinforcing filler comprises more than 20 phr (for example, between 20 and 250 phr), preferably more than

30 phr (for example, between 30 and 200 phr), more preferably 40 phr (for example, between 40 and 150 phr), still more preferably more than 50 phr (for example, between 50 and 120 phr), particularly at least 55 phr (for example, from 55 to 95 phr), of a reinforcing inorganic filler.

The expression "reinforcing inorganic filler" should be understood here to mean any inorganic or mineral filler, whatever its color and its origin (natural or synthetic), also referred to as "white filler", "clear filler" or even "non-black filler", in contrast to carbon black, capable of reinforcing by itself alone, without means other than an intermediate coupling agent, a rubber composition intended for the manufacture, especially the tire manufactures, in other words capable of replacing, in its reinforcing role, a conventional grade, especially tire-grade, carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica ($SiO_2$) and/or the aluminous type, preferably alumina ($Al_2O_3$) are suitable in particular as the reinforcing inorganic fillers.

A fifth aspect of the invention is the rubber composition according to any one of the first to the fourth aspects, wherein the reinforcing inorganic filler predominately comprises silica, that is, the reinforcing inorganic filler comprises more than 50% by weight of silica per 100% by weight of the reinforcing inorganic filler. Preferably, the reinforcing inorganic filler may comprise 100% by weight, of silica per 100% by weight of the reinforcing inorganic filler. The reinforcing inorganic filler may comprise a type of silica or a blend of several silicas. The silica used may be any reinforcing silica known to a person skilled in the art, in particular any precipitated or pyrogenic silica having a BET surface area and a CTAB specific surface area that are both less than 450 $m^2/g$, preferably from 20 to 400 $m^2/g$. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

The reinforcing inorganic filler used, particularly in case of that it is silica, has a BET surface area and a CTAB specific surface area that are advantageously 50 to 350 $m^2/g$, more advantageously 100 to 300 $m^2/g$, still more preferably between 150 and 250 $m^2/g$.

The BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B).

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

A sixth aspect of the invention is the rubber composition according to any one of the first to the fifth aspects, wherein the reinforcing filler comprises less than 20 phr (for example, between 0 and 20 phr), preferably less than 15 phr (for example, between 0.5 and 15 phr), more preferably less than 10 phr (for example, between 1.0 and 10 phr), still more preferably less than 7.5 phr (for example, between 1.5 and 7.5 phr), particularly less than 5.0 phr (for example, between 2.0 and 5.0 phr), of carbon black.

Within the ranges indicated, there is a benefit of coloring properties (black pigmentation agent) and anti-UV properties of carbon blacks, without furthermore adversely affecting the typical performance provided by the reinforcing inorganic filler, namely high grip on normal road (especially on wet ground), and snowy ground.

In order to couple the reinforcing inorganic filler to the elastomer matrix, for instance, the diene elastomer, use can be made, in a known manner, of a coupling agent (or bonding agent) intended to provide a satisfactory connection, of chemical and/or physical nature, between the reinforcing inorganic filler (surface of its particles) and the elastomer matrix, for instance, the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO

2004/033548.

Particularly suitable silane polysulphides correspond to the following general formula (I):

(I) Z - A - Sx - A - Z , in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem.1]

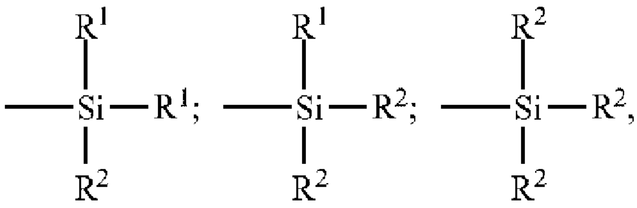

in which:

- the $R^1$ radicals which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl and/or ethyl),
- the $R^2$ radicals which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably a group selected from $C_1$-$C_4$ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis(($C_1$-$C_4$)alkoxyl($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula $[(C_2H_5O)_3Si(CH_2)_3S_2]_2$, or bis(3-triethoxysilylpropyl)disulphide, abbreviated to TESPD, of formula $[(C_2HSO)_3 Si(CH_2)_3S]_2$. Mention will also be made, as preferred examples, of bis(mono($C_1$-$C_4$ )alkoxyldi($C_1$-$C_4$)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to a preferred embodiment of the invention, the content of coupling agent may be from 0.5 to 15% by weight per 100% by weight of the reinforcing inorganic filler, particularly silica.

According to a preferred embodiment of the invention, the rubber composition may be based on less than 35 phr (for example, between 0 and 35 phr), preferably less than 30 phr (for example, between 0.1 and 30 phr), more preferably less than 25 phr (for example, between 0.5 and 25 phr), still more preferably less than 20 phr (for example, between 1 and 20 phr), particularly less than 15 phr (for example, between 1.5 and 15 phr) of coupling agent.

The rubber composition according to the invention is based on more than 5 phr (for example, between 5 and

45 phr) of reinforcing fibers selected from the group consisting of basalt fibers, glass fibers, carbon fibers and the mixtures thereof.

The reinforcing fibers are well known to a skilled person in the art and commercially available.

Basalt fibers may be produced by melt extrusion (centrifugal) spinning of basalt which is one of igneous rock.

Glass fibers may be produced by melt (centrifugal) spinning of a composition comprising vitreous component.

Carbon fiber may be produced by spinning and/or melt (centrifugal) spinning with a polymer such as polyacrylonitrile (PAN), rayon, petroleum pitch coal tar pitch and/or synthetic pitch as a precursor.

A seventh aspect of the invention is the rubber composition according to any one of the first to the sixth aspects, wherein the rubber composition is based on more than 10 phr (for example, between 10 and 40 phr) of the reinforcing fibers.

An eighth aspect of the invention is the rubber composition according to the seventh aspect, wherein the rubber composition is based on more than 15 phr (for example, between 15 and 35 phr), preferably more than 20 phr (for example, between 20 and 30 phr), of the reinforcing fibers.

The volume average length of reinforcing fibers in the rubber composition according to the invention is between 1.0 and 10 mm in the mixed state, especially in the cured state.

The mixed state is a state after incorporating the reinforcing fiber into the rubber composition. The cured state is a state after curing the rubber composition.

A ninth aspect of the invention is the rubber composition according to any one of the first to the eighth aspects, wherein the volume average length of reinforcing fibers in the rubber composition in the mixed state, especially in the cured state, is preferably between 2.0 and 10 mm, still more preferably between 3.0 and 10 mm, particularly between 4.0 and 10 mm, more particularly between 5.0 and 10 mm, still more particularly between 5.5 and 10 mm.

According to a preferred embodiment of the invention, the number average length of reinforcing fibers in the rubber composition in the mixed state, especially in the cured state, may be between 2.0 and 10 mm, particularly between 3.0 and 10 mm, more particularly between 4.0 and 10 mm, still more particularly between 5.0 and 10 mm.

The volume average length of reinforcing fibers ($L_v$) and the number average length of reinforcing fibers ($L_n$) are defined that corresponds to:

$$L_v=\{\Sigma(L_i\times V_i)\}/(\Sigma V_i)$$
$$=[\Sigma\{L_i\times\pi\times(D/2)^2\times L_i\times n_i\}]/[\Sigma\{\pi\times(D/2)^2\times L_i\times n_i\}]$$
$$=\{\Sigma(L_i^2\times n_i)\}/\{\Sigma(L_i\times n_i)\}$$

$$L_n=\{\Sigma(L_i\times n_i)\}/\{\Sigma(n_i)\}$$

wherein $L_i$ is the length of the $i^{th}$ reinforcing fiber(s), $n_i$ is the number of reinforcing fiber(s) having the length of $L_i$, Vi is the volume of reinforcing fiber(s) having the length of $L_i$, and D is the diameter of reinforcing fibers. The above formula assumes that the diameter of reinforcing fibers is constant.

A tenth aspect of the invention is the rubber composition according to any one of the first to the ninth aspects, wherein the diameter of reinforcing fibers in the rubber composition in the mixed stated, especially in the cured state, is between 1 and 50μm, preferably between 3 and 20μm, more preferably between 5 and 15μm.

The length (and the diameter if necessary) of each reinforcing fiber may be determined by observing the rubber composition in the mixed state, especially in the cured state, with a three dimensional measurement X-ray analyzer, preferably determined in accordance with a method described below and used for the present examples.

According to a preferred embodiment of the invention, the volume average length of reinforcing fibers before incorporating the reinforcing fibers into the rubber composition is at least 1.0 mm (for example, from 1.0 to 15 mm), preferably at least 2.0 mm (for example, from 2.0 to 15 mm), more preferably at least 3.0 mm (for example, from 3.0 to 15 mm), still more preferably at least 4.0 mm (for example, from 4.0 to 15 mm), particularly at least 5.0 mm (for example, from 5.0 to 15 mm), more particularly at least 6.0 mm (for example, from 6.0 to 15 mm).

According to a preferred embodiment of the invention, the number average length of reinforcing fibers before incorporating the reinforcing fibers into the rubber composition is at least 1.0 mm (for example, 1.0 to 15 mm), preferably at least 2.0 mm (for example, from 2.0 to 15 mm), more preferably at least 3.0 mm (for example, from 3.0 to 15 mm), still more preferably at least 4.0 mm (for example, from 4.0 to 15 mm), particularly at least 5.0 mm (for example, from 5.0 to 15 mm), more particularly at least 6.0 mm (for example, from 6.0 to 15 mm).

According to a preferred embodiment of the invention, the diameter of reinforcing fibers before incorporating the reinforcing fibers into the rubber composition may be between 1 and 50μm, preferably between 3 and 20μm, more preferably between 5 and 15μm.

The length (and the diameter if necessary) of each reinforcing fiber before incorporating the reinforcing fibers

into the rubber composition may be determined in accordance with a method described below and used for the present examples, that is, by observing the reinforcing fibers with an optical microscope.

An eleventh aspect of the invention is the rubber composition according to any one of the first to the tenth aspects, wherein the reinforcing fibers are covered with glue, preferably resorcinol formaldehyde latex (RFL) glue. Such glue can enhance adhesiveness of the reinforcing fibers to the elastomer matrix.

A twelfth aspect of the invention is the rubber composition according to any one of the first to the eleventh aspects, wherein the tensile elongation at break of reinforcing fibers is less than 5%, preferably less than 3%.

The tensile elongation at break of reinforcing fibers can be determined by each method in accordance with ISO 11566 (1996) or JIS R 7606 (2000).

A thirteenth aspect of the invention is the rubber composition according to any one of the first to the twelfth aspect, wherein the reinforcing fibers are selected from the group consisting of carbon fibers and the mixtures thereof, preferably selected from the group consisting of ex-pitch carbon fibers, ex-PAN carbon fibers and the mixtures thereof.

The rubber composition according to the invention is based on a plasticizing agent.

The role of the plasticizing agent is to soften the matrix by diluting the elastomer and the reinforcing filler, and also to reduce shear force to the composition during mixing, which can prevent the mechanical action during the mixing from chopping the reinforcing fibers.

A fourteenth aspect of the invention is the rubber composition according to any one of the first to the thirteenth aspects, wherein the plasticizing agent is selected from the group consisting of liquid plasticizer(s), hydrocarbon resin(s) and the mixtures thereof.

According to a preferred embodiment of the fourteenth aspect, the plasticizing agent comprises no liquid plasticizer or comprises less than 150 phr, preferably between 0 and 100 phr, more preferably between 0 and 80 phr, still more preferably between 0 and 70 phr, particularly between 0 and 60 phr, more particularly between 10 and 60 phr, still more particularly between 20 and 60 phr, of the liquid plasticizer(s).

Any extending oil, whether of aromatic or non-aromatic nature, any liquid plasticizing agent known for its plasticizing properties with regard to elastomer matrix(es), for instance, diene elastomers, can be used as the liquid plasticizer(s) to soften the matrix by diluting the elastomer and the reinforcing filler. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

According to a preferred embodiment of the fourteenth aspect, the plasticizing agent comprises the liquid plasticizer(s) selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof, preferably selected from the group consisting of MES oils, TDAE oils, naphthenic oils, vegetable oils and the mixtures thereof, more preferably selected from the group consisting of MES oils, vegetable oils and the mixtures thereof, still more preferably selected from the group consisting of vegetable oils and the mixtures thereof. The vegetable oil(s) may be made of an oil selected from the group consisting of linseed, safflower, soybean, corn, cottonseed, turnip seed, castor, tung, pine, sunflower, palm, olive, coconut, groundnut and grapeseed oils, and the mixtures thereof, particularly sunflower oil(s), more particularly sunflower oil(s) containing over 60%, still more particularly over 70%, advantageously over 80%, more advantageously over 90%, still advantageously 100%, by weight of oleic acid.

According to a preferred embodiment of the fourteenth aspect, the plasticizing agent comprises no hydrocarbon resin or less than 150 phr, preferably between 0 and 100 phr, more preferably between 0 and 80 phr, still more preferably between 0 and 70 phr, particularly between 0 and 60 phr, more particularly between 10 and 60 phr, still more particularly between 20 and 60 phr, of the hydrocarbon resin(s).

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:

- a $Tg_{DSC}$ of above 20°C (for example, between 20°C and 100°C), preferably above 30°C (for example, between 30°C and 100°C), more preferably above 40°C (for example, between 40°C and 100°C);
- a number-average molecular weight (Mn) of between 400 and 2000 g/mol (more preferably between 500 and 1500

g/mol);

- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45μm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a preferred embodiment of the fourteenth aspect, the plasticizing agent comprises the hydrocarbon resin(s) selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixtures thereof. Use is more preferably made, among the above copolymer resins, of those selected from the group consisting of (D)CPD/vinylaromatic copolymer resins, (D)CPD/terpene copolymer resins, (D)CPD/$C_5$ fraction copolymer resins, (D)CPD/$C_9$ fraction copolymer resins, terpene/ vinylaromatic copolymer resins, terpene/phenol copolymer resins, $C_5$ fraction/ vinyl-aromatic copolymer resins, $C_9$ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The preferred resins above are well known to a person skilled in the art and are commercially available, for example:

- polylimonene resins: by DRT under the name "Dercolyte L120" (Mn=625 g/mol; Mw=1010 g/mol; PI=1.6; $Tg_{DSC}$=72°C) or by Arizona Chemical Company under the name "Sylvagum TR7125C" (Mn=630 g/mol; Mw=950 g/mol; PI=1.5; $Tg_{DSC}$=70°C);
- $C_5$ fraction/vinylaromatic, notably $C_5$ fraction/styrene or $C_5$ fraction/$C_9$ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";

limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified α-methylstirene resins. It should be remembered that, in order to characterize these phenol-modified resins, use is made, in a known way, of a number referred to as "hydroxyl number" (measured according to Standard ISO 4326 and expressed in mg KOH/g). α-Methylstirene resins, in particular those modified with phenol, are well known to a person skilled in the art and are available commercially, for example sold by Arizona Chemical Company under the names "Sylvares SA 100" (Mn=660 g/mol; PI=1.5; $Tg_{DSC}$=53°C); "Sylvares SA 120" (Mn=1030 g/mol; PI=1.9; $Tg_{DSC}$=64°C); "Sylvares 540" (Mn=620 g/mol; PI=1.3; $Tg_{DSC}$=36°C; hydroxyl number=56 mg KOH/ g); and "Sylvares 600" (Mn=850 g/mol; PI=1.4; $Tg_{DSC}$=50°C; hydroxyl number=31 mg KOH/g).

A fifteenth aspect of the invention is the rubber composition according to any one of the first to the fourteenth aspects, where the total content of plasticizing agent is more than 30 phr (for example, between 30 and 150 phr), preferably more than 40 phr (for example, between 40 and 140 phr), more preferably more than 50 phr (for example, between 50 and 130 phr), more preferably more than 60 phr (for example, between 60 and 120 phr).

A sixteenth aspect of the invention is the rubber composition according to any one of the first to the fourteenth aspects or the fifteenth aspect, wherein a ratio of the total content of plasticizing agent to the total content of reinforcing filler is between 0.5 and 2.0, preferably between 0.6 and 1.9, more preferably between 0.7 and 1.8, still more preferably between 0.8 and 1.7, particularly between 0.9 and 1.6, more particularly between 1.0 and 1.5, still more particularly from between 1.1 and 1.4.

The rubber compositions according to the invention may be based on all or a portion(s) of the usual additives

generally used in the elastomer compositions for articles (for example, tires, shoes, conveyor or caterpillar tracks), such as, for example, protection agents, such as antiozone waxes, chemical antiozonants, antioxidants, tackifying resins, methylene acceptors (for example phenolic novolak resin) or methylene donors (for example HMT or H3M hexamethylenetetramine (HMT) or hexamethoxymethylmelamine (H3M)), a crosslinking system based either on sulphur or on donors of sulphur and/or peroxide and/or bismaleimides, vulcanization accelerators, or vulcanization activators.

These compositions can be also based on coupling activators when a coupling agent is used, agents for covering the reinforcing inorganic filler or more generally processing aids capable, in a known way, by virtue of an improvement in the dispersion of the filler in the rubber matrix and of a lowering of the viscosity of the compositions, of improving their property of processing in the raw state; these agents are, for example, hydrolysable silanes, such as alkylalkoxysilanes, polyols, polyethers, amines, or hydroxylated or hydrolysable polyorganosiloxanes.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 10.0 phr, more preferably between 0.5 and 3.0 phr, and that of the primary accelerator is preferably between 0.5 and 5.0 phr.

Use may be made, as accelerator (primary or secondary) of any compound capable of acting as accelerator of the vulcanization of elastomer matrix, for instance, diene elastomers, in the presence of sulphur, in particular accelerators of the thiazoles type and their derivatives, accelerators of thiurams types, or zinc dithiocar bamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazolesulphenimide ("TBSI"), zinc dibenzyldithiocarbamate ("ZBEC"), Tetrabenzylthiuram disulfide ("TBZTD") and the mixtures thereof.

According to a preferred embodiment of the invention, a production method of a rubber composition according to the invention, the rubber composition based on an elastomer matrix, a reinforcing filler, a reinforcing fibers selected from the group consisting of basalt fibers, glass fibers, carbon fibers and the mixtures thereof, and a plasticizing agent may comprise at least a step of incorporating at least the reinforcing fibers into the rubber composition in a mixer provided with at least two rolls having a roll nip which is equal to or above the volume average length of reinforcing fibers before incorporating into the rubber composition, wherein the volume length of reinforcing fibers before incorporating the reinforcing fibers into the rubber composition is at least 1.0 mm (for example, from 1.0 to 15 mm) preferably at least 2.0 mm (for example, from 2.0 to 15 mm), more preferably at least 3.0 mm (for example, from 3.0 to 15 mm), still more preferably at least 4.0 mm (for example, from 4.0 to 15 mm), particularly at least 5.0 mm (for example, from 5.0 to 15 mm). The meaning of roll(s) includes that of rotor(s). The roll nip is a distance of a gap between the rolls.

According to a more preferred embodiment of the preferred embodiment, the step of incorporating at least the reinforcing fibers into the rubber composition may occur after incorporating the reinforcing filler into the rubber composition.

According to a still more preferred embodiment of the preferred embodiment or the more preferred embodiment, the rubber composition may be further based on a plasticizing agent and the step of incorporating at least the reinforcing fibers into the rubber composition may occur after incorporating the plasticizing agent into the rubber composition.

According to a particular embodiment of the preferred embodiment, the more preferred embodiment or the still more preferred embodiment, the rubber composition may be further based on a crosslinking system and the step of incorporating at least the reinforcing fibers into the rubber composition may occur after incorporating the crosslinking system into the rubber composition.

According to a more particular embodiment of the preferred embodiment, the more preferred embodiment, the still more preferred embodiment or the particular embodiment, the rubber composition in which the reinforcing fibers are incorporated may present the Mooney viscosity of less than 70 Mooney unit (for example, between 0 and 70 Mooney units) before incorporating the reinforcing fibers into the rubber composition.

Above the maxima indicated, there is a risk to excessively enhance shear force to the composition in the mixer, and that the shear force can makes the length of reinforcing fibers shorter than the desired length.

For all these reasons, it is preferably less than 65 Mooney units (between 5 and 65 Mooney units), more preferably less than 60 Mooney units (between 10 and 60 Mooney units), still more preferably less than 55 Mooney units (for example, between 15 and 55 Mooney units), particularly less than 50 Mooney units (for example, between 20 and 50 Mooney units), more particularly less than 45 Mooney units (for example, between 25 and 45 Mooney units), still more particularly at most 40 Mooney units (for example, 30 to 40 Mooney units).

Use of the Mooney viscosity measurement is made of an oscillating consistometer as described in ASTM D-1646. The Mooney viscosity measurement is carried out in accordance with the following principle: the composition in the raw state (i.e., before curing) is molded in a cylindrical chamber heated to 100°C. After preheating for one minute, the rotor rotates within the test specimen at 2 revolutions/minute and the working torque for maintaining this movement

is measured after rotating for 4 minutes. The Mooney viscosity ML $_{(1+4)}$ is expressed in "Mooney unit" (MU, with 1 MU = 0.83 Newton.metre).

According to a still more particular embodiment of the preferred embodiment, the more preferred embodiment, the still more preferred embodiment, the particular embodiment or the more particular embodiment, the roll nip may be more than 1.0, preferably more than 2.0 mm, more preferably more than 3.0 mm, still more preferably more than 4.0 mm, particularly more than 5.0 mm.

According to an advantageous embodiment of the preferred embodiment, the more preferred embodiment, the still more preferred embodiment, the particular embodiment, the more particular embodiment or the still more particular embodiment, the mixer may be an internal mixer, for example, a Banbury mixer, a kneader, a Brabender.

According to a more advantageous embodiment of the advantageous embodiment, the internal mixer may have a tip clearance which may be equal to or above the volume average length of reinforcing fibers before incorporating the reinforcing fibers into the rubber composition. The tip clearance is a distance of a gap between the rotor and the wall of internal mixer.

According to a still more advantageous embodiment of the advantageous embodiment or the more advantageous embodiment, the tip clearance may be more than 1.0 mm, preferably more than 2.0 mm, more preferably more than 3.0 mm, still more preferably more than 4.0 mm, particularly more than 5.0 mm.

According to an especial embodiment of the advantageous embodiment, the more advantageous embodiment or the still more advantageous embodiment, the internal mixer may be filled with the composition for less than 65% (for example, between 45 and 65%) by volume of total volume of the mixer.

Above the maximum indicated, there is to excessively enhance shear force to the composition in the mixer and that the shear force can make the reinforcing fibers shorter than the desired length.

For all these reasons, it is preferably less than 60% (for example, between 50 and 60%) by volume of total volume of the mixer.

According to another advantageous embodiment of the preferred embodiment, the more preferred embodiment, the still more preferred embodiment, the particular embodiment, the more particular embodiment or the still more particular embodiment, the mixer may be an external mixer, for example, an open roll mill.

The rubber compositions according to the invention may be manufactured in appropriate mixers using two successive preparation phases well known to a person skilled in the art: a first phase of thermomechanical working or kneading (referred to a as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking system (vulcanization system) are incorporated.

According to a preferred embedment of the invention, a process which may be used for the manufacture of such compositions comprises, for example and preferably, the following steps:

- incorporating in the elastomer matrix, for instance, the diene elastomer(s), in a first mixer, the reinforcing filler, the plasticizing agent, during a first stage ("non productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a crosslinking system and further the reinforcing fibers on a second mixer provided with at least two rolls having a roll nip which is a gap between the rolls and is equal to or above the volume average length of reinforcing fibers;
- kneading everything up to a maximum temperature of less than 110°C;
- extruding or calendering the rubber composition thus obtained, in particular in the form of a tire tread, a shoe sole.

By way of example, the first (non-productive) phase is carried out in a single thermomechanical stage during which all the necessary constituents are introduced into an appropriate first mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer as a second mixer, such as an open mill; the combined mixture is then mixed (the second (productive) phase) for a few minutes, for example between 2 and 15 min.

According to a more preferred embedment of the preferred embodiment, the production method comprises a step of each time changing the direction of introduction during the second (productive) phase in particularly on the second mixer. That means the step that the rubber composition is reintroduced between the rolls by changing the direction of passage.

According to a still more preferred embedment of the preferred embodiment or the more preferred embedment,

the production method comprises a step of, during the second (productive) phase, incorporating the crosslinking system on the second mixer, subsequently, setting the roll nip of second mixer at equal to or above the volume average length of reinforcing fibers before incorporating into the rubber composition, and then incorporating the reinforcing fibers on the second mixer.

According to another still more preferred embedment of the preferred embodiment or the more preferred embedment, the production method comprises a step of, during the second (productive) phase, setting the roll nip of second mixer at equal to or above the volume average length of reinforcing fibers before incorporating into the rubber composition, before incorporating the crosslinking system on the second mixer, and before incorporating the reinforcing fibers on the second mixer.

The final composition thus obtained is subsequently calendered, for example in the form of a sheet or of a plaque, in particular for laboratory characterization, or else extruded in the form of a rubber profiled element which can be used directly as an article, for example, a tire tread, a shoe sole, a conveyor belt and a caterpillar track tread.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

A seventeenth aspect of the invention is the rubber composition according to any one of the first to the sixteenth aspects, wherein M10(x) and M10(y) are M10 moduli measured at 23 °C of the rubber composition respectively in a first direction and a second direction perpendicular to the first direction (for example, the first direction: a circumferential direction of a tire, the second direction an axial direction of a tire) and wherein a ratio of M10(x) to M10(y) is between 0.1 and 10, preferably between 0.2 and 5, more preferably between 0.3 and 3, still more preferably between 0.5 and 2. M10 moduli is the nominal secant moduli at 10% elongation, and M10(x) and M10(y) are determined in accordance with a method described below and used for the present examples.

An eighteenth aspect of the invention is an article comprising a rubber composition according to any one of the first to the seventeenth aspects.

A nineteenth aspect of the invention is the article according to the eighteenth aspect, wherein the article is a tire, a shoe, a conveyor or a caterpillar track.

A twentieth aspect of the invention is the article according to the nineteenth aspect, wherein the article is a tire.

According to a preferred embedment of the twentieth aspect, the article is a tire of which an external portion comprises a rubber composition according to the first to the sixteenth aspects, preferably, the external portion is a tread and/or a sidewall(s) of the tire.

A twenty first aspect of the invention is the article according to the twentieth aspect, wherein the article is a tire of which a tread comprises a rubber composition according to any one of the first to the sixteenth aspects.

According to a preferred embodiment of the twenty first aspect, the rubber compositions according to any one of the first to the seventeenth aspects may constitute all or a portion only of the tread of the tire, in the case of a tread of composite type formed from several rubber compositions of different formulations.

The twenty first aspect also applies to the cases where the rubber compositions described above form only one part of treads of composite or hybrid type, especially those consisting of two radially superposed layers of different formulations (referred to as "cap-base" construction), that are both patterned and intended to come into contact with the road when the tire is rolling, during the service life of the latter. The base part of the formulation described above could then constitute the radially outer layer of the tread intended to come into contact with the ground from the moment when a new tire starts rolling, or on the other hand its radially inner layer intended to come into contact with the ground at a later stage.

A twenty second aspect of the invention is the article according to the twenty first aspect, wherein a rubber composition according to any one of the first to the seventeenth aspects represents more than 5% by volume per 100% by volume of the all tread.

A twenty third aspect of the invention is the article according to the twenty first aspect or the twenty second aspect, wherein a rubber composition according to any one of the first to the seventeenth aspects represents more than 5% of the tread surface width.

A twenty fourth aspect of the invention is the article according to any one of the nineteenth to the twenty third aspects, wherein the tire is a snow tire.

According to a preferred embodiment of any one of the nineteenth to the twenty fourth aspects, the tires are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

According to a preferred embedment of the nineteenth aspect, the article is a shoe which comprises a rubber composition according to the first to the seventeenth aspects. Preferably, the article is a shoe which of a sole comprises a rubber composition according to the first to the seventeenth aspects.

According to a preferred embedment of the nineteenth aspect, the article is a conveyor which comprises a

rubber composition according to any one of the first to the seventeenth aspects. Preferably, the article is a conveyor of which a belt comprises a rubber composition according to any one of the first to the seventeenth aspects.

According to a preferred embedment of the nineteenth aspect, the article is a caterpillar track which comprises a rubber composition according to any one of the first to the seventeenth aspects. Preferably, the article is a caterpillar track of which a tread comprises a rubber composition according to any one of the first to the seventeenth aspects. More preferably, the article is a caterpillar track tread of which block(s) comprises a rubber composition according to any one of the first to the seventeenth aspects.

The invention relates to the rubber compositions and the above articles, both in the mixed state (after mixing and before curing) and in the cured state (i.e., after crosslinking or vulcanization).

The invention is further illustrated by the following non-limiting examples.

**Example**

In the test, seven rubber compositions identified as T-1 to T-4 (a reference and comparative examples) and C-1 to C-3 (examples according to the invention) are compared. They are based on a diene elastomer(s) (a mixture of SBR and BR) as an elastomer matrix reinforced with a blend of silica and carbon black with/without reinforcing fibers, and a plasticizing agent. The formulations of the seven rubber compositions, with the content of the various products expressed in phr, volume or number average length of reinforcing fibers before mixed (before mixing) and in the cured state and their properties in the cured state are given at Table 1, Table 2 and Table 3.

The reinforcing filler, its associated coupling agent, the elastomer matrix, the plasticizing agent and the various other ingredients, furthermore the reinforcing fibers in case of T-3 only, with the exception of the vulcanization system, were successively introduced into an internal mixer having an initial vessel temperature of approximately 80°C; the mixer was thus approximately 70% full (% by volume). Thermomechanical working (non-productive phase) was then carried out in one stage, which lasts in total approximately 5 to 6 minutes, until a maximum "dropping" temperature of around 160°C (150 to 165°C) was reached. The mixture thus obtained was recovered and cooled and then sulphur and an accelerator of sulphenamide type, furthermore the reinforcing fibers in case of T-4 and C-1 to C-3 only, were incorporated on an external mixer (homofinisher), which was an open mill having two rolls of which the nip was set at 6.0 mm (all cases with the exception of T-4) or 0.5 mm (T-4), at 20 to 50°C, everything being mixed (productive phase) for an appropriate time (for example, between 5 and 12 min) up to a maximum temperature of the combine mixture of 40 to 100°C. This operation of homogenization of the vulcanization system (sulphur and sulphenamide) and the reinforcing fibers (T-3, T-4 and C-1 to C-3) consisted in passing the compound between the rolls several times, each time changing the direction of introduction (the compound was recovered under the rolls, it was reintroduced between the rolls by changing the direction of passage).

In case to produce T-4 and C-1 to C-3, during the productive phase, sulphur and the accelerator of sulphenamide type were incorporated on the open mill, subsequently, the reinforcing fibers were incorporated on the open mill.

The roll nip was above the volume average length of reinforcing fibers in T-4 and C-1 to C-3 in the cured state, and was equal to the volume average length of reinforcing fibers before the reinforcing fibers were mixed with the other ingredients of each rubber composition. Thus, it was sure that the roll nip was equal to or above the volume average length of reinforcing fibers in T-4 and C-1 to C-3 in the mixed state, of course, and in the cured state.

After incorporating the crosslinking system and before incorporating the reinforcing fibers into the rubber composition, these rubber compositions according to the invention (T-4 and C-1 to C-3) presented the Mooney viscosity at 35 Mooney units which was same as that in T-2, and lower than that (70 Mooney units) in T-1.

The compositions thus obtained were subsequently calendered by a third device, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

After molding into the form of sheet(s) or block(s) and before the following measurements/tests, each of the rubber compositions was placed in a press with heated platens at a temperature (typically 150°C), and for the time that was necessary for the crosslinking of these rubber compositions (typically several tens of minutes), at a pressure (typically 16 bar).

The length (and the diameter also if necessary) of each reinforcing fiber in the rubber compositions (T-3, T-4 and C-1 to C-3) in the cured state was measured in accordance with the procedure described below in several steps. The object formed by the rubber composition after compounding the constituents of the rubber composition and after mixed, preferably after vulcanization, that is cured state, is referred to as a compound.

The first step consisted in extracting the reinforcing fibers from the compound by proceeding in the following manner:

- the compound was cut into small pieces then an acetone extraction was carried out so as to eliminate as much as

possible the plasticizing agent (for example, oil(s), resin(s)), and the additives such waxes, and antioxidants, described below;

- the compound was then pyrolysed under an inert atmosphere ($N_2$) at 550°C, so as to eliminate the organic substances by cracking: polymers, sulphur network, accelerators, residual plasticizing agent, described below;
- the residue obtained then contained the reinforcing fibers, the reinforcing filler (the reinforcing inorganic filler and/or carbon black) and mineral products initially present in the compound (such as silica) or optionally formed during the pyrolysis.

The second step consisted in preparing the sample to be placed in a microscope by proceeding in the following manner:

- At the end of the first step, the combustion residues containing the reinforcing fibers were recovered. These residues were very slightly compressed using a mortar and pestle in order to separate the fibers from one another.
- The reinforcing fibers were thus recovered on a sample holder comprising a carbon adhesive tape. It was also possible to directly stamp the aluminum sample holder bearing the carbon adhesive tape onto the extracted fibers.
- The samples were then blown with dry air in order to eliminate the free fibers that could damage the column of the microscope.

The third step consisted in determining the dimensions of the reinforcing fibers:

- The samples were observed by a microscopy on the microscope which is an optical microscope (VCR-800 from HiROX Co., Ltd.). Also, the microscopy can be on a scanning electron microscope (SEM).
- For each sample, lengths and diameters of at least 100 objects (reinforcing fibers) extracted from each compound, which was each of these rubber compositions (T-3, T-4, C-1, C-2 and C-3), were measured.
- Each number average of the reinforcing fibers and each volume average of the reinforcing fibers in the cured state were calculated with the above measurement results.

By the above third step, the length (and the diameter) and the number average, and the volume average of reinforcing fibers before incorporating the reinforcing fibers into the rubber composition was also measured and calculated.

The results from Table 2 shows that the volume/number average lengths of reinforcing fibers, in the cured state, in the rubber compositions (C-1 to C-3) according to the invention are longer than that in the comparative examples (T-3 and T-4) even though each of the reinforcing fibers has same volume/number average lengths of reinforcing fibers before incorporated in each mixture.

These tensile tests for the rubber compositions were done in order to determine the elasticity stresses. Unless otherwise indicated, they were carried out in accordance with French Standard NF T 46-002 of September 1988. Processing the recordings of traction at 23°C, with a rate of extension of 100 mm/minute, was to plot the curve of modulus as a function of the elongation, the modulus used here being the nominal (or apparent) secant modulus measured in first elongation, calculated by reducing to the initial cross section of the test specimen. Each test specimen was prepared from each sheet (rubber sheet) which passed between the rolls of open mill and was cured. Each test specimen was of a constant with of 20 mm, a thickness of about 1.5 mm and a length between jaws of 10 mm. Two types of the nominal secant moduli (or apparent stresses, in MPa) were measured, the first type was measured in first elongation at 10% elongation in a direction (usually same as the circumferential direction of tire) perpendicular to the axles of rolls between which each rubber sheet finally passed, respectively denoted M10(x), and the second one were measured in first elongation at 10% elongation in another direction (usually same as the axial direction of tire) parallel to the axles of rolls between which each rubber sheet finally passed, respectively denoted M10(y).

The ratio of average value between M10(x) and M10(y) of the examples (or the comparative examples) to that of the reference (T-1), set at 100, is representative of stability of the tire on normal road, that is to say that normal road behavior, therefore a value greater than that of the reference composition (T-1), set at 100, indicates an improved performance.

Also, the ratio of M10(x) to M10(y) is representative of deviation of elasticity stresses between circumferential and axle directions of the tire.

For friction coefficient measurements on snow, that is Snow $\mu$ laboratory measurement, the friction coefficient measurements were carried out based on the block(s) of the rubber compositions sliding at a given condition (a displacement: 0 to 0.03 m, a speed: 0 to 0.5 m/s, and an acceleration: 5 $m/s^2$) over a hard pack snow track, set at around-10°Cwith a CTI penetrometer reading of about 92 in accordance with Standard ASTM F1805, with an imposed stress (200 to 300 kPa). The forces generated in a direction of travel (Fx) of the block(s) and in another direction perpendicular to the travel (Fz) were measured. The Fx/Fz ratio determines the friction coefficient of the test specimen on the snow.

This test, the principle of which is well known to a person skilled in the art (see, for example, an article entitled "Investigation of rubber friction on snow for tires" written by Sam Ella, Pierre-Yves Formagne, Vasileios Koutsos and Jane R. Blackford (38th LEEDS-Lyons Symposium on tribology, Lyons, 6-9 Sep. 2011)) makes it possible to evaluate, under representative conditions, the grip on snow which would be obtained after a running test on a vehicle fitted with tires whose tread is composed of the same rubber compositions. Values are expressed as snow grip performance, therefore a value greater than that of the reference composition (T-1), set at 100, indicates an improved performance.

The results from Table 3 demonstrate that the rubber compositions (C-1 to C-3) according to the invention have an unexpectedly improved balance of performances between snow grip and normal road stability than that of the reference (T-1) which is a conventional rubber composition for a snow tire tread.

Moreover, the results from Table 3 shows that the rubber compositions (C-1 to C-3) according to the invention have significant improvements of normal road stability and balance of performances between snow grip and normal road stability than that of the comparative example (T-2) which is a snow grip performance oriented rubber composition for a snow tire tread, at the sacrifice of stability on normal road.

Furthermore, the results from Table 1 indicates that the rubber compositions (C-1 to C-3) according to the invention have amazing improvements of snow grip, normal road stability and the balance of these performances in comparison with that of the other comparative examples (T-3 and T-4) which are rubber compositions conventionally produced by a production method described in the patent literature 2 or produced with a narrow roll nip (0.5 mm) being below that in the others (6.0 mm), and which have the reinforcing fibers of which volume average length (0.20 mm, 0.22 mm) are much shorter than that (5.2 mm) of C-1 to C-3 in the cured state, even though each of them had same volume average length of the reinforcing fibers as that of the others in the initial state, that is, before the reinforcing fibers were incorporated into each composition.

In conclusion, the rubber composition according to the invention allows an improvement of performances between snow grip and normal road behavior.

[Table 1]

| Rubber composition(s) | T-1 | T-2 | T-3 | T-4 | C-1 | C-2 | C-3 |
|---|---|---|---|---|---|---|---|
| BR (1) | 25 | 25 | 25 | 25 | 25 | 25 | 25 |
| SBR1 (2) | 75 | 75 | 75 | 75 | 75 | 75 | 75 |
| Carbon black (3) | 4 | 4 | 4 | 4 | 4 | 4 | 4 |
| Silica (4) | 120 | 60 | 60 | 60 | 60 | 60 | 60 |
| Coupling agent (5) | 9.6 | 9.6 | 9.6 | 9.6 | 9.6 | 9.6 | 9.6 |
| Hydrocarbon resin (6) | 25 | 25 | 25 | 25 | 25 | 25 | 25 |
| Liquid plasticizer (7) | 55 | 55 | 55 | 55 | 55 | 55 | 55 |
| Reinforcing fiber (8) | | | 18 | 18 | 18 | 11 | 25 |
| ZnO | 1.5 | 1.5 | 1.5 | 1.5 | 1.5 | 1.5 | 1.5 |
| Stearic acid | 3 | 3 | 3 | 3 | 3 | 3 | 3 |
| Antiozone wax | 1.9 | 1.9 | 1.9 | 1.9 | 1.9 | 1.9 | 1.9 |
| Antioxidant (9) | 2.8 | 2.8 | 2.8 | 2.8 | 2.8 | 2.8 | 2.8 |
| DPG (10) | 2.1 | 2.1 | 2.1 | 2.1 | 2.1 | 2.1 | 2.1 |
| Sulphur | 1.4 | 1.4 | 1.4 | 1.4 | 1.4 | 1.4 | 1.4 |
| Accelerator (11) | 1.6 | 1.6 | 1.6 | 1.6 | 1.6 | 1.6 | 1.6 |

(1) BR: BR with 0.3% of 1,2 vinyl; 2.7% of trans; 97% of cis-1,4 ($Tg_{DSC}$ = -105°C);
(2) SBR: solution SBR with 16% of styrene unit ($Tg_{DSC}$ = -65°C);
(3) Carbon black: Carbon black (ASTM grade N234 from Cabot);
(4) Silica: Silica ("Zeosil 1165MP" from Rhodia (CTAB, BET: about 160 $m^2/g$));
(5) Coupling agent TESPT ("Si69" from Evonik);
(6) Hydrocarbon resin $C_5/C_9$ type ("Escorez ECR-373" from Exxon, $Tg_{DSC}$= 44°C);
(7) Oleic sunflower oil ("Agripure 80" from Cargill, Weight percent oleic acid: 100%);
(8) Carbon fibers covered with resorcinol formaldehyde latex glue (from Nippon Sheet Glass Co., Ltd.), having a volume average length of 6.0 mm (a number average length of 6.0 mm) before incorporating the carbon fibers into each rubber composition, and having a diameter of 8$\mu$m before incorporating the carbon fibers into each rubber composition and in the cured state;
(9) N-(1,3-dimethylbutyl)-N-phenyl-para-phenylenediamine ("Santoflex 6-PPD" from Flexsys);
(10) Diphenylguanidine ("Perkacit DPG" from Flexsys);
(11) N-dicyclohexyl-2-benzothiazolesulphenamide ("Santocure CBS" from Flexsys);

[Table 2]

| | T-3 | T-4 | C-1 | C-2 | C-3 |
|---|---|---|---|---|---|
| Mixing process of reinforcing fibers (12) | P-1 | P-2 | P-3 | P-3 | P-3 |
| Volume average length of reinforcing fibers before incorporating the reinforcing fibers each the rubber composition [mm] | 6.0 | 6.0 | 6.0 | 6.0 | 6.0 |
| Number average length of reinforcing fibers before incorporating the reinforcing fibers each the rubber composition [mm] | 6.0 | 6.0 | 6.0 | 6.0 | 6.0 |
| Volume average length of reinforcing fibers in the cured state [mm] | 0.20 | 0.22 | 5.9 | 5.9 | 5.9 |
| Number average length of reinforcing fibers in the cured state [mm] | 0.17 | 0.18 | 5.2 | 5.2 | 5.2 |
| (12) P-1: a conventional process to incorporate the reinforcing fibers and the other ingredients of the rubber composition, with the exception of the crosslinking system, into the rubber composition in the internal mixer; P-2: a process to incorporate the reinforcing fibers into the rubber composition on the open mill with the roll nip of 0.5 mm after incorporating the other ingredients of the rubber composition, with the crosslinking system, into the rubber composition; P-3: a process to incorporate the reinforcing fibers into each rubber composition on the open mill with the roll nip of 6.0 mm after incorporating the other ingredients of each rubber composition, with the crosslinking system, into each rubber composition. | | | | | |

[Table 3]

| Properties after vulcanization | T-1 | T-2 | T-3 | T-4 | C-1 | C-2 | C-3 |
|---|---|---|---|---|---|---|---|
| Ratio of M10(x) to M10(y) | 1.0 | 1.0 | 1.0 | 1.1 | 1.5 | 1.0 | 1.5 |
| Average between M10 (x) and M10(y) | 100 | 32 | 73 | 74 | 406 | 242 | 494 |
| Snow $\mu$ laboratory | 100 | 142 | 117 | 118 | 128 | 132 | 124 |
| Balance of performance between snow grip and stability on normal road | 100 | 87 | 95 | 96 | 267 | 187 | 309 |

## Claims

**1.** A rubber composition based on at least:

- an elastomer matrix;
- a reinforcing filler;
- reinforcing fibers; and
- a plasticizing agent; wherein
- the reinforcing filler predominately comprises a reinforcing inorganic filler;
- the amount of reinforcing fibers is more than 5 phr;
- the reinforcing fibers are selected from the group consisting of basalt fibers, glass fibers, carbon fiber and the mixtures thereof, preferably carbon fibers;

**characterised in that**:

- the volume average length of reinforcing fibers in the rubber composition in the mixed state is between 1.0 and 10 mm, the mixed state being a state after incorporating the reinforcing fibers into the rubber composition;
- the volume average length of reinforcing fibers ($L_V$) corresponds to:

$$Lv=\{\Sigma(L_i^2\times n_i)\}/\{\Sigma(L_i\times n_i)\},$$

- $L_i$ is the length of the ith reinforcing fiber(s); and
- $n_i$ is the number of reinforcing fiber(s) having the length of $L_i$.

**2.** The rubber composition according to Claim 1, wherein the elastomer matrix comprises at least one diene elastomer

selected from natural rubber, synthetic polyisoprenes, polybutadienes, butadiene copolymers, isoprene copolymers and the mixtures thereof.

3. The rubber composition according to Claim 1 or Claim 2, wherein the elastomer matrix comprises more than 50 phr of a first diene elastomer which is a styrene-butadiene copolymer, and optionally comprises less than 50 phr of a second diene elastomer which is different from the first diene elastomer.

4. The rubber composition according to any one of Claims 1 to 3, wherein the reinforcing filler comprises more than 20 phr of a reinforcing inorganic filler.

5. The rubber composition according to any one of Claims 1 to 4, wherein the reinforcing inorganic filler predominantly comprises silica.

6. The rubber composition according to any one of Claims 1 to 5, wherein the reinforcing filler comprises less than 20 phr of carbon black.

7. The rubber composition according to any one of Claims 1 to 6, wherein the rubber composition is based on more than 10 phr of the reinforcing fibers, preferably wherein the rubber composition is based on more than 15 phr of the reinforcing fibers.

8. The rubber composition according to any one of Claims 1 to 7, wherein the diameter of reinforcing fibers in the rubber composition in the mixed state is between 1 and 50 $\mu$m.

9. The rubber composition according to any one of Claims 1 to 8, wherein the reinforcing fibers are covered with glue, preferably resorcinol formaldehyde latex glue.

10. The rubber composition according to any one of Claims 1 to 9, wherein the tensile elongation at break of reinforcing fibers is less than 5%.

11. The rubber composition according to any one of Claims 1 to 10, wherein the total content of plasticizing agent is more than 30 phr.

12. The rubber composition according to any one of Claims 1 to 11, wherein a ratio of the total content of plasticizing agent to the total content of reinforcing filler is between 0.5 and 2.0.

13. The rubber composition according to any one of Claims 1 to 12, wherein M10(x) and M10(y) are M10 moduli measured at 23 °C of the rubber composition respectively in a first direction and a second direction perpendicular to the first direction, and wherein a ratio of M10(x) to M10(y) is between 0.1 and 10.

14. An article comprising a rubber composition according to any one of Claims 1 to 13, preferably wherein the article is a tire, a shoe, a conveyor or a caterpillar track, more preferably wherein the article is a tire, still more preferably wherein the article is a tire of which a tread comprises a rubber composition according to any one of Claims 1 to 13, particularly wherein a rubber composition according to any one of Claims 1 to 13 represents more than 5% by volume per 100% by volume of the all tread, more particularly wherein a rubber composition according to any one of Claims 1 to 13 represents more than 5% of the tread surface width, still more particularly wherein the tire is a snow tire.

## Patentansprüche

1. Gummizusammensetzung, basierend wenigstens auf:

   - einer Elastomermatrix;
   - einem Verstärkungsfüllstoff;
   - Verstärkungsfasern; und
   - einem Weichmacher;

   wobei:

- der Verstärkungsfüllstoff vorherrschend einen anorganischen Verstärkungsfüllstoff umfasst;
- die Menge an Verstärkungsfasern mehr als 5 phr beträgt;
- die Verstärkungsfasern aus der Gruppe ausgewählt sind, bestehend aus Basaltfasern, Glasfasern, Kohlenstofffasern und den Mischungen davon, bevorzugt Kohlenstofffasern;

**dadurch gekennzeichnet, dass**:

- die durchschnittliche Volumenlänge der Verstärkungsfasern in der Gummizusammensetzung im gemischten Zustand zwischen 1,0 und 10 mm beträgt, wobei der gemischte Zustand ein Zustand nach dem Einfügen der Verstärkungsfasern in die Gummizusammensetzung ist;
- die durchschnittliche Länge von Verstärkungsfasern ($L_v$) entspricht:

$$Lv=\{\Sigma(L_i^2\times n_i)\}/\{\Sigma(L_i\times n_i)\},$$

- $L_i$ die Länge der i. Verstärkungsfaser(n) ist; und
- $n_i$ die Anzahl der Verstärkungsfasern) mit der Länge $L_i$ ist.

**2.** Gummizusammensetzung gemäß Anspruch 1, wobei die Elastomermatrix wenigstens ein Dienelastomer umfasst, das aus Naturgummi, synthetischen Polyisoprenen, Polybutadienen, Butadien-Kopolymeren, Isopren-Kopolymeren und den Mischungen davon ausgewählt ist.

**3.** Gummizusammensetzung gemäß Anspruch 1 oder Anspruch 2, wobei die Elastomermatrix mehr als 50 phr eines ersten Dienelastomers umfasst, das ein StyrolButadien-Kopolymer ist und optional weniger als 50 phr eines zweiten Dienelastomers umfasst, das von dem ersten Dienelastomer unterschiedlich ist.

**4.** Gummizusammensetzung gemäß irgendeinem der Ansprüche 1 bis 3, wobei der Verstärkungsfüllstoff mehr als 20 phr eines anorganischen Verstärkungsfüllstoffs umfasst.

**5.** Gummizusammensetzung gemäß irgendeinem der Ansprüche 1 bis 4, wobei der anorganische Verstärkungsfüllstoff vorherrschend Siliziumoxid umfasst.

**6.** Gummizusammensetzung gemäß irgendeinem der Ansprüche 1 bis 5, wobei der Verstärkungsfüllstoff weniger als 20 phr Kohlenstoffschwarz umfasst.

**7.** Gummizusammensetzung gemäß irgendeinem der Ansprüche 1 bis 6, wobei die Gummizusammensetzung auf mehr als 10 phr Verstärkungsfasern basiert, wobei die Gummizusammensetzung bevorzugt auf mehr als 15 phr der Verstärkungsfasern basiert.

**8.** Gummizusammensetzung gemäß irgendeinem der Ansprüche 1 bis 7, wobei der Durchmesser der Verstärkungsfasern in der Gummizusammensetzung im gemischten Zustand zwischen 1 und 50$\mu$m beträgt.

**9.** Gummizusammensetzung gemäß irgendeinem der Ansprüche 1 bis 8, wobei die Verstärkungsfasern mit Klebstoff, bevorzugt Resorcinformaldehyd-Latexklebstoff abgedeckt sind.

**10.** Gummizusammensetzung gemäß irgendeinem der Ansprüche 1 bis 9, wobei die Bruch-Zugdehnung von Verstärkungsfasern geringer ist als 5 %.

**11.** Gummizusammensetzung gemäß irgendeinem der Ansprüche 1 bis 10, wobei der Gesamtgehalt des Weichmachers mehr als 30 phr ist.

**12.** Gummizusammensetzung gemäß irgendeinem der Ansprüche 1 bis 11, wobei ein Verhältnis des Gesamtgehaltes des Weichmachers gegenüber dem Gesamtgehalt der Verstärkungsfasern zwischen 0,5 und 2,0 beträgt.

**13.** Gummizusammensetzung gemäß irgendeinem der Ansprüche 1 bis 12, wobei M10(x) und M10(y) M10 moduli, gemessen bei 23 °C der Gummizusammensetzung jeweils in einer ersten Richtung und einer zweiten Richtung lotrecht zur ersten Richtung sind und wobei ein Verhältnis von M10(x) zu M10(y) zwischen 0,1 und 10 beträgt.

**14.** Artikel umfassend eine Gummizusammensetzung gemäß irgendeinem der Ansprüche 1 bis 13, wobei der Artikel bevorzugt ein Reifen, ein Schuh, ein Transportband oder ein Raupenfahrwerk ist, wobei weiter bevorzugt der Artikel ein Reifen ist, wobei noch weiter bevorzugt der Artikel ein Reifen ist, bei dem ein Profil eine Gummizusammensetzung gemäß irgendeinem der Ansprüche 1 bis 13 umfasst, wobei bevorzugt eine Gummizusammensetzung gemäß irgendeinem der Ansprüche 1 bis 13 mehr als 5 Vol.-% per 100 Vol.-% des Gesamtprofils darstellt, wobei noch weiter bevorzugt eine Gummizusammensetzung gemäß irgendeinem der Ansprüche 1 bis 13 mehr als 5 % der Profiloberflächenweite darstellt, wobei der Reifen noch weiter bevorzugt ein Winterreifen ist.

## Revendications

**1.** Composition de caoutchouc à base d'au moins :

- une matrice élastomère ;
- une charge de renforcement ;
- des fibres de renforcement ; et
- un agent plastifiant ;

dans laquelle

- la charge de renforcement comprend principalement une charge de renforcement inorganique ;
- la quantité de fibres de renforcement est supérieure à 5 pcc ;
- les fibres de renforcement sont choisies dans le groupe constitué de fibres de basalte, de fibres de verre, de fibres de carbone et de mélanges de celles-ci, de préférence, de fibres de carbone ;

**caractérisée en ce que**

- la longueur moyenne en volume des fibres de renforcement dans la composition de caoutchouc à l'état mélangé se situe entre 1,0 et 10 mm, l'état mélangé étant un état après avoir incorporé les fibres de renforcement dans la composition de caoutchouc ;
- la longueur moyenne en volume des fibres de renforcement ($L_v$) correspond à :

$$L_v = \{\Sigma(L_i^2 \text{ x } n_i)\}/\{\Sigma(L_i \text{ x } n_i)\},$$

- $L_i$ est la longueur de la/des $i^{\text{ème(s)}}$ fibre (s) de renforcement ; et
- $n_i$ est le nombre de fibres de renforcement ayant la longueur $L_i$.

**2.** Composition de caoutchouc selon la revendication 1, dans laquelle la matrice élastomère comprend au moins un élastomère diénique choisi parmi le caoutchouc naturel, les polyisoprènes synthétiques, les polybutadiènes, les copolymères de butadiène, les copolymères d'isoprène et les mélanges de ceux-ci.

**3.** Composition de caoutchouc selon la revendication 1 ou la revendication 2, dans laquelle la matrice élastomère comprend plus de 50 pcc d'un premier élastomère diénique qui est un copolymère de styrène et de butadiène et qui comprend facultativement moins de 50 pcc d'un second élastomère diénique qui est différent du premier élastomère diénique.

**4.** Composition de caoutchouc selon l'une quelconque des revendications 1 à 3, dans laquelle la charge de renforcement comprend plus de 20 pcc d'une charge de renforcement inorganique.

**5.** Composition de caoutchouc selon l'une quelconque des revendications 1 à 4, dans laquelle la charge de renforcement inorganique comprend principalement de la silice.

**6.** Composition de caoutchouc selon l'une quelconque des revendications 1 à 5, dans laquelle la charge de renforcement comprend moins de 20 pcc de noir de carbone.

**7.** Composition de caoutchouc selon l'une quelconque des revendications 1 à 6, la composition de caoutchouc étant à base de plus de 10 pcc de fibres de renforcement, de préférence la composition de caoutchouc étant à base de

plus de 15 pcc de fibres de renforcement.

8. Composition de caoutchouc selon l'une quelconque des revendications 1 à 7, dans laquelle le diamètre des fibres de renforcement dans la composition de caoutchouc à l'état mélangé se situe entre 1 et 50 μm.

9. Composition de caoutchouc selon l'une quelconque des revendications 1 à 8, dans laquelle les fibres de renforcement sont recouvertes de colle, de préférence de colle au latex-formaldéhyde-résorcinol.

10. Composition de caoutchouc selon l'une quelconque des revendications 1 à 9, dans laquelle l'allongement en traction à la rupture des fibres de renforcement est inférieur à 5 %.

11. Composition de caoutchouc selon l'une quelconque des revendications 1 à 10, dans laquelle la teneur totale en agent plastifiant est supérieure à 30 pcc.

12. Composition de caoutchouc selon l'une quelconque des revendications 1 à 11, dans laquelle un rapport de la teneur totale en agent plastifiant à la teneur totale en charge de renforcement se situe entre 0,5 et 2,0.

13. Composition de caoutchouc selon l'une quelconque des revendications 1 à 12, dans laquelle M10(x) et M10(y) sont des modules M10 mesurés à 23 °C de la composition de caoutchouc respectivement dans une première direction et dans une seconde direction perpendiculaire à la première direction, et dans laquelle un rapport de M10(x) à M10(y) se situe entre 0,1 et 10.

14. Article comprenant une composition de caoutchouc selon l'une quelconque des revendications 1 à 13, de préférence, dans lequel l'article est un pneu, une chaussure, un convoyeur ou une chenille, de manière davantage préférée, dans lequel l'article est un pneu, de manière encore préférée, l'article est un pneu dont une bande de roulement comprend une composition de caoutchouc selon l'une quelconque des revendications 1 à 13, en particulier dans lequel une composition de caoutchouc selon l'une quelconque des revendications 1 à 13 représente plus de 5 % en volume pour 100 % en volume de toute la bande de roulement, plus particulièrement dans lequel une composition de caoutchouc selon l'une quelconque des revendications 1 à 13 représente plus de 5 % de la largeur de la surface de la bande de roulement, plus particulièrement encore, dans lequel le pneu est un pneu neige.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012069565 A
- WO 2015086449 A
- WO 2016104815 A
- US 2007221303 A
- JP 2013147561 B
- US 2006292356 A
- JP 2002249619 B
- EP 1072446 A
- JP 2011001521 B
- WO 03016387 A
- WO 9637547 A
- WO 9928380 A
- WO 03002648 A
- WO 03002649 A
- WO 2004033548 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2008055986 A
- WO 2010072685 A


### Non-patent literature cited in the description


- *The Journal of the American Chemical Society,* February 1938, vol. 60, 309
- **SAM ELLA ; PIERRE-YVES FORMAGNE ; VASILEIOS KOUTSOS ; JANE R. BLACKFORD.** *38th LEEDS-Lyons Symposium on tribology, Lyons,* 06 September 2011